# EUROPEAN PATENT APPLICATION

(11) **EP 0 769 700 A1**
(43) Date of publication of application: **23.04.1997**
(21) Application number: 96830513.6
(22) Date of filing: 09.10.1996
(51) Int. Cl.: G01P 3/49

(54) **Device for detecting the angular speed of a rotating member**

(30) Priority: 17.10.1995 IT TO950835
(71) Applicant: C.R.F. Societa' Consortile per Azioni, 10043 Orbassano (Torino) (IT)
(72) Inventor: Palazzetti, Mario, 10051 Avigliana, Torino (IT); De Cristofaro, Francesco, c/o C.R.F., 10043 Orbassano, Torino (IT)
(74) Representative: Notaro, Giancarlo

(57) **Abstract**

There is described a device for detecting the angular speed of a rotating member, comprising a disk (D) of an electrically conductive material, which is to be rotatably connected to a member whose angular speed must be measured, a permanent magnet (M) provided in a fixed position adjacent to disk (D), with its two polar expansions (E) located on opposite sides of disk (D), so as to generate within the rotating disk (D) an electromotive force dependent upon the angular speed of the disk (D), which on its turn gives raise to parasitic currents within the disk (CP), and means for measuring the magnetic field generated by said parasitic currents and for processing this measurement so as to provide an output signal indicative of the angular speed of the disk (D).

## Description

The present invention relates to devices for detecting the angular speed of a rotating member.

The prior art in the field of these detecting devices, e.g. in applications such as measuring the rotational speed of a motor-vehicle engine, conventionally makes use of phonic wheels. These devices have a relatively high cost and do not generate a continuous signal at the output, so that they are not adapted for instance to the detection of torsional vibrations.

In order to overcome this drawback, the present invention provides a device for detecting the angular speed of a rotating member, characterized in that it comprises a disk of electrically conductive material, which is to be rotatably connected to the member, whose angular speed must be measured, a permanent magnet arranged in a fixed position adjacent to the peripheral area of the disk, with its two polar expansions located on opposite sides of the disk, so as to generate within the disk an electromotive force dependent upon the angular speed of the disk, which gives origin on its turn to parasitic currents within the disk, and means for measuring the magnetic field generated by said parasitic currents, and for processing this measurement so as to provide an output signal indicative of the angular speed of the disk.

The device according to the invention exploits the known principle for which a relative movement of a conductive element (be it ferromagnetic or not) adjacent to a permanent magnet induces an electromotive force, dependent upon the speed, which gives origin to induced currents, called parasitic or Foucault or eddy currents. A typical application of these currents is for instance the construction of electromagnetic brakes which are provided in form of disks which move within the air gap of an electromagnet; in this case, radially along the disk, which intercepts the field force lines there are induced electromotive forces which cause the above-mentioned currents to circulate within the mass of the disk. The resulting effect of these forces in this case causes the dissipating and hence braking action opposing the disk rotation. The value of the electromotive forces which are induced is proportional to the magnetic induction and the speed whereas the induced currents are inversely proportional to resistivity of the material.

In the case of the present invention, the magnetic field generated by the eddy currents is measured, e.g. by a Hall-probe in order to obtain an output signal indicative of the angular speed of the disk.

The invention will be now described with reference to the annexed drawings, given purely by way of non-limiting example, in which:
- figure 1 is a diagrammatic view of a device according to the invention,
- figure 2 is a diagram which shows the output signal of the detecting device according to the invention as a function of the angular speed of the disk,
- figure 3 is a further diagram which shows the output signal in the case of a variant of the device according to the invention, for a given angular speed of the disk, and
- figure 4 is the derived signal.

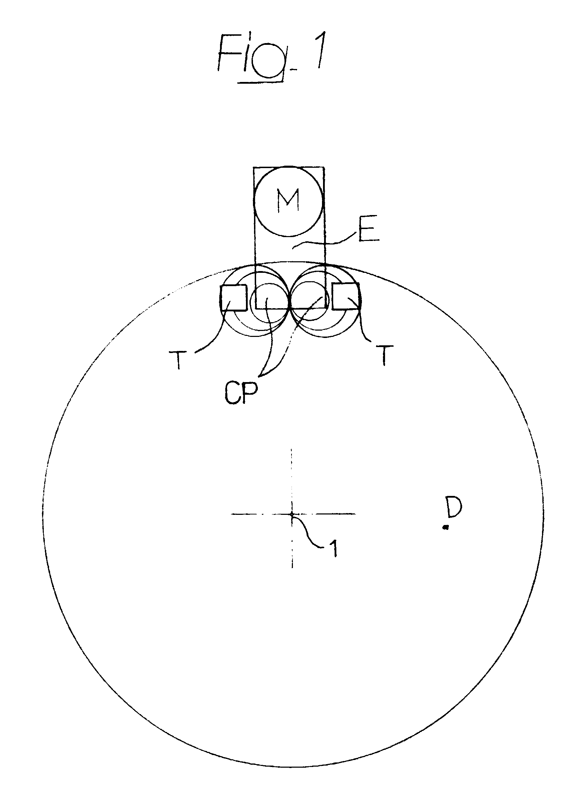

With reference to figure 1, symbol D designates a disk of electrically conductive material, e.g. aluminium, which is rotatably connected around its axis 1 to a member whose angular speed must be determined, for example the shaft of an internal combustion engine. For sake of simplicity, this member is not shown in the annexed drawings, and also the means rotatably connecting disk D to this shaft are not shown. These means can be made in any known way.

By M there is diagrammatically designated a U-shaped permanent magnet, which is supported in a fixed position adjacent to the peripheral area of disk D with its two polar expansions E (only one of which is visible in the drawing) arranged on opposite sides of the disk. Also the means for supporting the permanent magnet M are not shown in the annexed drawings, both because this means can be made in any known way, and because its deletion from the drawings renders the latter simpler and easier to understand.

As a result of the above described phenomenon, the rotation of the disk through the air gap defined by the polar expansions E of the permanent magnet M gives raise to eddy currents CP whose flow lines are indicated in figure 1, starting from the conductor-magnet coupling area up to the areas T wherein there are provided means for measuring the magnetic field generated by the eddy currents. The measuring means of the magnetic field preferably include a Hall-transducer arranged along the magnetic circuit linked with the parasitic currents. Said means for detecting the induced magnetic field are not shown herein since they can be made in any known way and will be clearly apparent to those skilled in the art. The above-mentioned areas designated by T in figure 1 are favourable for carrying out a measure by a Hall transducer. As already shown, the signal from the Hall sensors is proportional to the induction produced by the parasitic currents which are induced by the field of the permanent magnet, and therefore to the rotational speed of disk D.

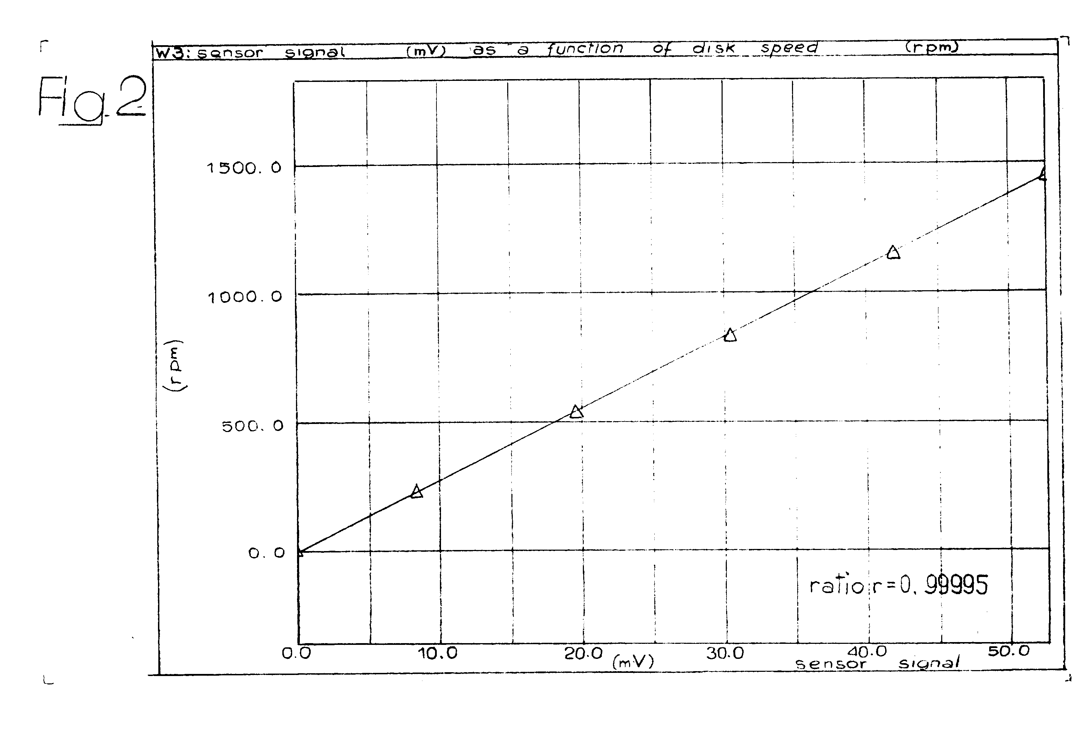

In one embodiment, the device included an aluminium disk with a thickness of 1.2 mm and was tested in a laboratory by detecting the output signal as a function of the speed of the disk itself. The obtained signal is proportional to the disk speed as shown in figure 2. In this case no conditioning electronic circuit has been used: the signal has been picked up at the output of the Hall sensor. The ratio between the output signal and the angular speed is 0.99995. The sensibility of the non amplified sensor is of 6.3 mV per m/sec. in the following conditions: air gap: 3 mm; disk thickness: 1.2 mm; average diameter of the disk: 110 mm. Obviously, the DC signal of the sensor, can be passed through a voltage/frequency converter to provide an alternated signal which is typical of conventional pick-up devices.

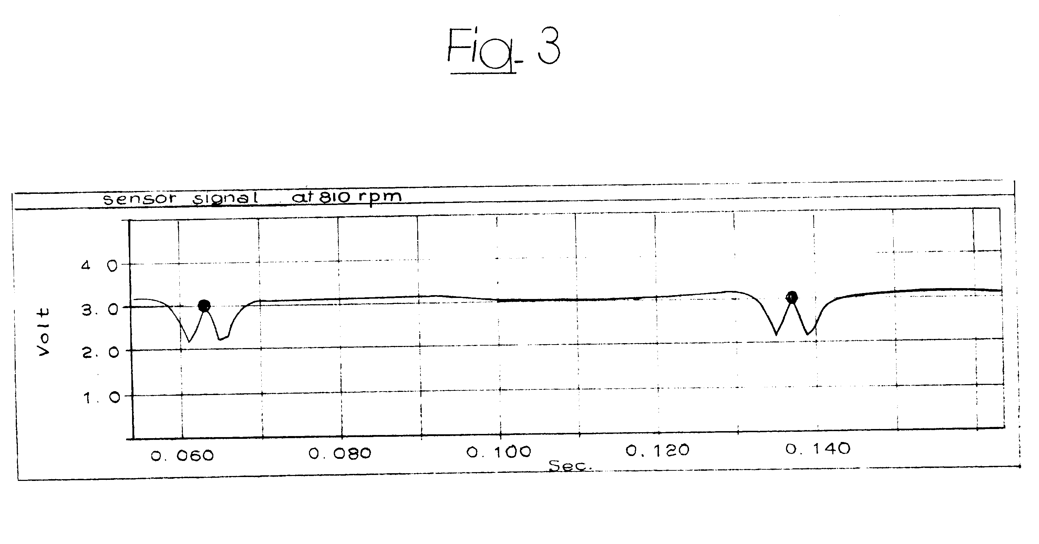

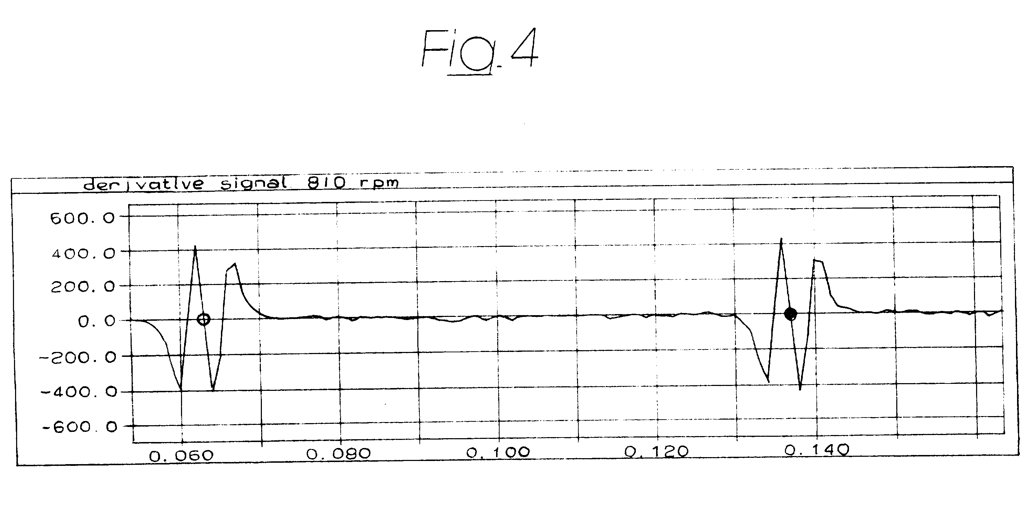

The sensor device according to the invention is sensitive to the gaps/notches formed in the disk which can be used as angular references over the main speed signal. For each gap with dimensions lower than the expansions of the field detector two signals are generated at the passage of the areas designated by T in figure 1. The effect of a notch of about 1 mm in disk D is seen by the sensor as shown in figure 3 with reference to an angular speed of 810 rpm. The differentiated signal shown in figure 3 enables the precise angular position of the reference notch to be located, which can be useful in any application wherein it is necessary to control the phasing of the rotating member. The device provides a high precision, since it is based on the intersection of the derivative signal with the abscissas axis (figure 4).

An important advantage of the device according to the invention lies in that the effect of the axial offset of the disk is almost totally compensated by the asymmetrical arrangement of the sensor: the disk, in the embodiment considered, has a thickness of 1.2 mm and moves through an air gap of 3 mm. The above-mentioned offset, may move the disk closer to one polar expansion E, but simultaneously causes an increase of distance of the disk from the other polar expansion, so that the variations in the output signal are reduced to a negligible value.

The effect of the radial offset, even if in the above described solution can affect the signal, however can be easily nullified by suitably dimensioning the expansions E of the permanent magnet M, by using the inner area of the disk so as to avoid the edge effect of the disk itself. The best compromise between the thickness of the disk and the air gap of the sensor takes place with ratios solid/hollow of the same order of magnitude (1-1.5 mm).

From the foregoing description it is clearly apparent that the detecting device according to the invention has some particularly important features:
- output signal directly proportional to the disk speed,
- continuous output signal, in the order of tens of mV, which can be amplified,
- insensitivity to the axial offset,
- low sensitivity to the radial offset,
- possibility of providing phasing references,
- possibility of detecting torsional vibrations,
- simplicity of detection of speed variations, for example for directly controlling actuators such as anti-skid devices for motor-vehicles, which are efficient and of low cost,
- signal which can be rendered compatible with the conventional pick-up devices by means of a simple V-F converter,
- low cost of manufacture.

Naturally, while the principle of the invention remains the same, the details of construction and the embodiments may widely vary with respect to what has been described and illustrated purely by way of example, without departing from the scope of the present invention.

## Claims

1. Device for detecting the angular speed of a rotating member, characterized in that it comprises:
- a disk (D) of electrically conductive material, which is to be rotatably connected to a member whose angular speed must be measured,
- a permanent magnet (M) provided in a fixed position adjacent to the disk (D), with its two polar expansions (E) located on opposite sides of the disk (D), so as to generate within the rotating disk (D) an electromotive force dependent upon the angular speed of the disk (D), which gives raise on its turn to parasitic currents within the disk (D), and
- means for measuring the magnetic field generated by said parasitic currents and for processing these measurements so as to provide an output signal indicative of the angular speed of the disk (D).

2. Detecting device according to claim 1, characterized in that said means for measuring the magnetic field induced by the parasitic currents comprises a Hall sensor.

3. Detecting device according to claim 1, characterized in that the disk has a thickness of about 1-1.5 mm and is spaced from each of the two polar expansions (E) a distance of the same order of magnitude of its thickness.

4. Detecting device according to claim 1, characterized in that the disk has at least one notch which provides an output signal including a reference of the angular position of the disk.

5. Detecting device according to claim 1, characterized in that said reference is precisely determined on the basis of the intersection of the derivative signal with the axis of the abscissas.

6. Detecting device according to claim 1, characterized in that it includes a voltage/frequency converter for the output signal coming from said means for measuring the induced magnetic field, so as to obtain a signal compatible with conventional pick-up devices.
